## Europäisches Patentamt

## European Patent Office

## Office européen des brevets

(19)

(11) Publication number: **0 118 991**
**B1**

(12)

# EUROPEAN PATENT SPECIFICATION

(45) Date of publication of patent specification: **24.06.87**

(51) Int. Cl.⁴: **H 01 J 29/96,** G 06 F 3/033

(21) Application number: **84300668.5**

(22) Date of filing: **02.02.84**

(54) Interactive display system.

(30) Priority: **09.02.83 GB 8303621**

(43) Date of publication of application:
**19.09.84 Bulletin 84/38**

(45) Publication of the grant of the patent:
**24.06.87 Bulletin 87/26**

(84) Designated Contracting States:
**CH DE FR IT LI NL SE**

(56) References cited:
**EP-A-0 036 340**
**EP-A-0 066 965**
**DE-A-2 621 337**
**DE-A-2 629 973**
**GB-A-2 001 794**
**US-A-4 253 737**

(73) Proprietor: **The Secretary of State for Defence in Her Britannic Majesty's Government of the United Kingdom of Great Britain and Northern Ireland Whitehall London SW1A 2HB (GB)**

(72) Inventor: **Clark, Michael George**
**12 Churchdown Road**
**Malvern Worcestershire, WR14 3JX (GB)**
Inventor: **Shanks, Ian Alexander**
**56 The Bury**
**Pavenham Bedford (GB)**
Inventor: **Smith, Charles James Thomas**
**61 Clerkenwell Crescent**
**Malvern Worcestershire (GB)**

(74) Representative: **Beckham, Robert William et al**
**Procurement Executive Ministry of Defence Patents 1A(4), Room 2014**
**Empress State Building Lillie Road London SW6 1TR (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

### Technical field

The present invention concerns interactive display systems; systems whereby a user can interact directly with a display by touching a chosen point on the screen of the display with a probe. The position of the probe on the screen is measured electrically to locate the point of contact. This measurement can be used by the system to identify, select, or modify, features depicted on the screen of the display.

### Background art

Various interactive display systems using potentiometric techniques for probe position measurement have been disclosed. For example the systems described in the specifications EP—A—0,066,965, and GB—A—1,492,730.

The system of EP—A—0,066,965 is a liquid crystal display together with a transparent resistive overlay and pen. This is used as a signature verification system. Pen position on the overlay is measured as a voltage level from x, y bus bars. As the pen is moved over the overlay a signal representative of a persons signature is produced. This is compared with a stored replica in a computer. During pen movement a visible image is also formed under the pen on the liquid crystal display to provide visual confirmation of the signature. No separate addressing of the display is provided.

The system described in GB—A—1,492,730 is a digitizing tablet to be used in conjunction with a processor. The tablet has two superimposed orthogonal (x, y) sets of electrodes electrically isolated from one another. Each electrode set comprises several parallel spaced separate conductors. A probe capacitively senses a voltage on an electrode. Measurements are made alternately using the two sets of electrodes to measure an x, and a y position of the probe. A course position of the probe is obtained by detecting which two conductors are adjacent the probe contact position. A fine position is obtained by interpolation between two adjacent conductors. It has an advantage of requiring only one signal to be generated and successively switched to each conductor. However it has the disadvantage of needing two sets of electrodes and two consecutive measurements to determine both the ordinate and abscissa probe positions.

### Disclosure of the invention

The invention disclosed herein is intended to provide simultaneous measurement of the probe position ordinate and abscissa. This obviates the need for relatively fast energisation circuitry, allowing latitude in the choice of circuit design.

Other and various advantages, as found for various embodiments of this invention, will be described in the text that follows.

In accordance with the invention, there is provided an interactive display system comprising:—

an electrically addressable display having a front screen;

a resistive means formed by a layer adjacent to and extending across the front surface of this screen;

an electrical source connected to the resistive means for applying energisation signals thereto; and

sensing means, including a probe and probe circuit, responsive to the level of signal sensed, when the probe is applied to the resistive means to indicate the position of the probe contact;

the display being characterised in that:—

the resistive means is of partitioned structure, being comprised of a plurality of like electrodes (9), each a separate track of transparent resistive material;

the source is such as to provide a set of distinguishable energisation signals, and is connected to apply a different signal to each electrode simultaneously; and

the sensing means includes probe circuitry for identifying different sensed signals, and, for determining the ordinate and abscissa of probe position from the level and identity found for each sensed signal.

Whilst the resistive means may be formed upon a separable screen overlay, there is particular advantage in forming the resistive means as an integral part of the screen itself. This obviates the problems of overlay alignment and distortion. This integration is particularly important where the display provided is non-emissive, as is the case for liquid crystal panel displays. Since here an overlay is not used, the attenuation of light can be much reduced, and spurious internal reflections can be minimised.

Each electrode track may make but a single traverse of the screen. Each track then corresponds to a single co-ordinate value and there is a unique correspondance between that co-ordinate and the identity of the signal sensed. Only simple processing circuitry is then required to determine the probe position ordinate or abscissa.

Alternatively, each electrode track may have a folded configuration, each therefore making several traverses of the screen. This can be of advantage in large or high resolution displays, for this allows reduction of the number of electrodes within any loss in resolution, and requires fewer connections to source. Each track, however, then corresponds to several co-ordinates; the correspondence between signal identity and co-ordinate is not unique. Co-ordinate determination here requires not only the identification of the sensed signal, but also the measurement of signal level in order to resolve this ambiguity; processing circuitry is therefore required.

It is preferable to use as source one providing a set of common level signals. The sensed signal level, either a current or voltage level, then depends only on track resistivity and probe position and is independent of the signal identity. This affords simplification in the design of the source and of the processing circuitry.

The energising signals may be distinguished, for example, by frequency, by phase, or by waveform. Thus, for example, the signals may constitute a set of repetitive phase delayed monopulse signals and these may be identified using a timing circuit. Alternatively, the signals could be members of an isogonal set—e.g. Walsh-function waveform signals or pseudo-random binary sequence coded signals. The latter coded signals could be identified using multi-channel correlation, or in preference to this, by timing the incidence of the longest run of binary 0's or 1's occurring in each code, or by evaluating the binary number consisting of the first N bits of the waveform, when N is the number of isogonal signals in the set.

The system may incorporate a matrix—addressed liquid crystal panel display—examples being a time—multiplexed display, a waveform-identity addressed radar, oscilloscope or analogue meter display, or a liquid crystal medium-on-silicon integrated display. With appropriate choice of the number, configuration, and dimensions of the electrodes, this can be achieved with a resolution identical to that of the display itself.

The system may incorporate a cathode ray tube (CRT) display. The determination of probe position is independent of the persistence of the phosphor and is possible whether the screen is glowing or not.

Thus, in distinction to light pen systems, it can be used with long persistence phosphors and with vector addressed CRT's.

It is particularly advantageous to use a combination of display and probe circuit that permits use of signals in common for display address and for electrode energisation for then a single source may be provided with substantial saving in circuitry. Thus, for example, it is possible to combine an isogonal signal addressed display (e.g. an oscilloscope display as described in U.K. Pat. No. 2001 794) and a probe circuit including circuitry capable of identifying the different isogonal signals. In this case it is convenient to have electrodes in equal number, orientation and in register each side of the front screen, these electrodes extending to the periphery of the screen where they can be connected in pairs each by different common connection to the source.

Where time variant energising signals are employed, direct contact between the probe and the resistive means is not essential. The coupling may be capacitive and a protective layer of dielectric material—for example, a thin film of titanium dioxide—may be applied over the front surface of the electrodes. The system can therefore be made relatively durable.

A high resistive voltage probe (e.g. an FET probe) may be used. In this case the electrodes may be connected to a common earth at their ends remote from the source connection. Signal level is here a potential.

Alternatively, a low resistance current probe may be used. In this case the electrodes may be open circuit at their ends remote from the source connection. The signal level here is then a current level, or, if a drop impedance is used, a corresponding voltage level. This alternative is less favoured however, as contact resistances are liable to vary and introduce indeterminate error.

In utilisation of the display systems aforementioned, problems may arise in the event of poor contact made between the probe and the resistive means, or of poor positioning of the probe relative to the resistive electrodes—it may for example be positioned where it straddles adjacent electrodes—in each case leading to a false reading or co-ordinates. Test circuits may be included:

i) to test valid contact of the probe;

ii) to provide self-calibration, to correct for contact impedance of the probe;

iii) to test frame rate of the detected waveform, to verify that the detected data is valid; and/or,

iv) to test amplitude of successive detected pulses, likewise to verify that the detected data is valid.

Accordingly, there is further provided a test circuit comprising:—

switch means connected to each of the electrodes;

control means, co-operative with the switch means, for controlling switching of the electrodes between a floating condition and a current carrying condition; and,

comparator means, co-operative with the probe, for comparing probe output for the floating condition—a test output, against a preset reference voltage, and also co-operative with the control means to switch the electrodes to the current carrying condition whensoever the test output exceeds the preset voltage, to enable co-ordinate measurement.

The switch means and control means may comprise an assembly of diodes, and a common controllable diode bias source, respectively.

In utilisation of the above test circuit, co-ordinate measurement is only enabled when the probe test output exceeds a preset value. At other times, when the probe contact is too poor to provide probe test output of sufficient value, co-ordinate measurement is disabled, so false measurement is avoided.

Improvement of co-ordinate resolution may be introduced by providing, in addition to the test circuit aforesaid, a sealing circuit comprising:—

store means, co-operative with the probe, for holding the test output thereof; and,

scaling means, co-operative with both the probe and the store means, for scaling the measurement output of the probe, or a signal derivative thereof, by a scale factor determined in accordance with the held value of the test output, to afford thereby self-calibrating correction.

Details of data validation circuits are also given in the description that follows.

## Brief introduction of the drawings

In the drawings accompanying this specification:—

Figure 1 is an illustrative drawing of an interactive display system embodying the features of this invention;

Figure 2 is a diagram showing a source for providing the different signals used in the operation of the system shown in the preceding figure; and,

Figure 3 is a diagram showing a configuration of solded electrodes that may be incorporated in an alternative display system.

Figure 4 is a circuit to test for valid contact of the probe and to correct for variations in contact impedance of the probe;

Figure 5 is a timing diagram for the circuit shown in Fig. 4;

Figure 6 is a circuit to test the repetition rate of the detected pulses in order to verify that valid data has been detected by the probe;

Figure 7 is a circuit to test the amplitude of successive detected pulses in order to verify that valid data has been detected by the probe; and

Figure 8 is an additional sub-circuit to be inserted in the circuit shown in Fig. 4 when the conductive tracks are driven with PRBS codes.

## Description of preferred embodiments

Embodiments of the invention will now be described, by way of example only, with reference to the accompanying drawings.

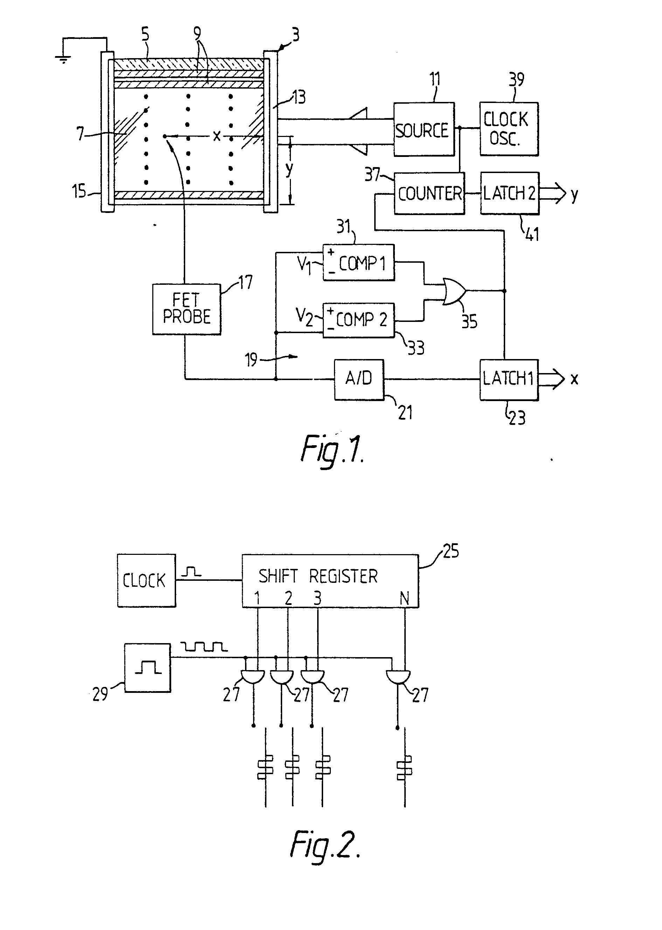

An interactive display system 1 is shown in figure 1. This system 1 comprises a liquid crystal panel display 3, the front screen of which, a glass substrate 5, is shown. Resistive means is provided by a layer 7 of transparent resistive material, thin film indium tin oxide, deposited uniformly over the surface of the screen 5. The layer 7 has been partitioned by a conventional photolithographic definition and etch process and is comprised of a pluraltiy of like electrodes 9, tracks which extend across the screen 5 from one side to the other. One end of each electrode 9 is connected to a signal source 11 by an edge connector 13. The other end of each electrode 9 is connected to Earth via a second edge connector 15. When signal is applied to each electrode 9 a potential gradient is developed, the potential at any point along each electrode track 9 is linearly dependent on the distance x from the edge of the screen 5.

The system 1 includes sensing means, i.e. an FET probe 17 and probe circuit 19. The operator interacts with the display 3 by placing the probe 17 in contact with the resistive means 7 at a chosen position on the screen 5. When the probe 17 comes into contact with one of the electrodes 9, the signal that is applied to this electrode 9 is sensed and the output signal developed by this probe 17 is processed in the probe circuit 19 by an analogue-to-digital converter 21. This latter converts the analogue output signal into digitised form and the digitised output developed is stored in a first latch 23. The digital code stored in this latch 23 serves as a measure of the x-coordinate, the abscissa of the probe position.

The components of the source 11 are shown in figure 2. This source 11 comprises: a shift register 25; an array of AND gates 27 connected to the output channels of this register 25; and; a square waveform generator 29 connected to the inputs of the AND gates 27. This source 11 provides a set of distinguishable signals, a different signal at the output of each AND gate 27. Each signal has the form of a pulse modulated AC square wave, and since it is truly alternating is also suitable for addressing the LCD display 3 itself. These signals all differ in phase.

The probe circuit 19 also includes circuitry for identifying the sensed signal. The output of the probe 17 is connected to a complementary pair of comparators 31 and 33 and an OR-gate 35. These respond to signal pulses and the output signal from the OR-gate 35 is used to halt the counting cycle of a counter 37. This counter is set by clock pulses from a clock oscillator 39, which also serves the source 11. The output of the counter 37, which depends on the signal phase, provides a measure of the y-co-ordinate, the ordinate of the probe position. This output is stored in a second latch 41. Latch output is synchronised by connecting the first latch 23 to the output of the OR-gate 35.

To ensure that the resolution of the interactive part of the system 1 is the same as that of the display itself, the energised electrodes 9 and the address electrodes (not shown) of the display 3, located on the reverse side of the screen substrate 5, are matched in number, dimension and alignment. During fabrication the two sets of electrodes are formed in register with each other. Where the source sigals are utilised for energisation and for address, the registered electrodes may be connected in pairs by common connections in the first edge connector 13.

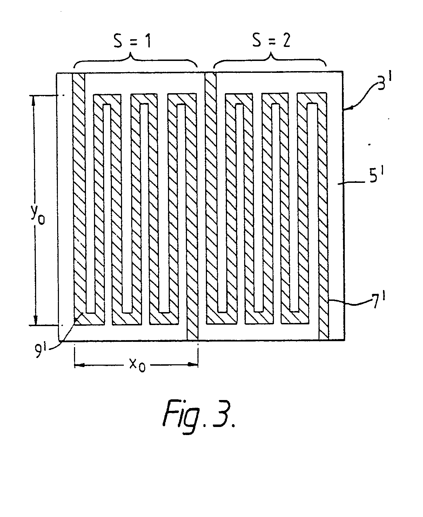

An alternative electrode configuration is shown in figure 3. Here the resistive means 7' is formed on the surface of the screen face-plate 5' of a CRT display 3'. It has been partitioned to define a plurality of folded electrode tracks 9'. Each electrode 9' has several connected parallel limbs, each of which extends across the screen 5' from one side to the other. This folded configuration allows reduction in the number of different signals and number of source connections required. The source and probe circuitry employed is similar to that already described (figures 1 & 2), but since in this example the position co-ordinates are no longer uniquely defined by either the sensed signal level or signal phase alone, additional processing circuitry is included to convert raw data from the convertor 21 and from the counter 37 to co-ordinate form. The algorithms used in this conversion are given below:—

$$x = (s-1)x_o + \text{entier } (r/y_o);$$

$$y = y_o \text{rem } (r/y_o);$$

where

x is the abscissa of the probe position;

$x_0$ is the width of screen occupied by each folded electrode;

y is the ordinate of the probe position;

$y_0$ is the length of each limb of the electrodes;

r is the distance of the probe from one end of the electrode, and is determined by measurement of the signal potential;

s is the number of the electrode counted from one edge of the screen, and is determined by measurement of the signal phase; and,

the functions entier $(r/y_0)$ and rem $(r/y_0)$ are the integer part and remainder of the variable $r/y_0$, respectively.

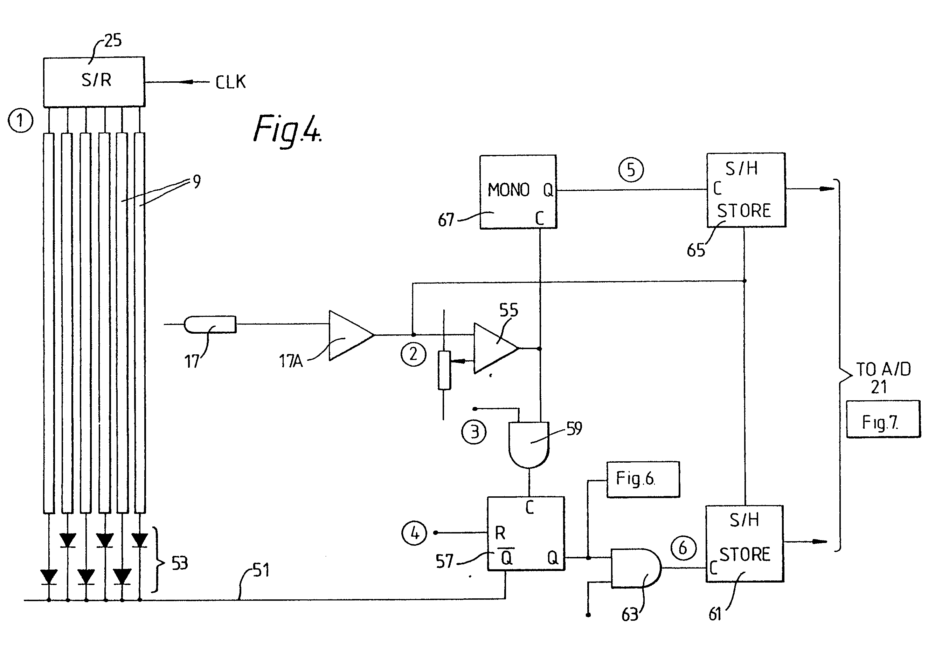

In the above systems, false measurement may result in the event of poor probe contact or poor positioning of the probe relative to the electrodes. A test circuit—figure 4—is thus provided to inhibit measurement in such event. In this circuit the resistive electrodes 9 are connected to a common line 51 by switches, an assembly of diodes 53. The probe 17, a high impedance FET voltage probe, is connected via a buffer amplifier 17A to an analogue comparator 55, where the probe output is compared with a preset reference voltage. Diode switching is controlled by a bistable flip-flop 57 which is interposed between the output of the comparator 55 and the common line 51. A first AND-gate 59 is included between the output of the comparator 55 and the control input of the bistable 57, for timing control. The bistable 57 also serves to control operation of a first sample-and-hold store 61 and is connected to it via a second AND-gate 63. This first sample-and-hold store 61 is connected to the output of the buffer amplifier 17A and serves to hold the measurement output of the probe 17. Scaling circuit components:— a second sample-and-hold store 65, and, a controlling delay monostable 67, are also shown in figure 4. This second sample-and-hold store 65 serves to hold the test output of the probe 17. The derivative signal outputs of the two stores 61 & 65 are relayed to an A/D converter 21, where scaling and signal measurement is performed.

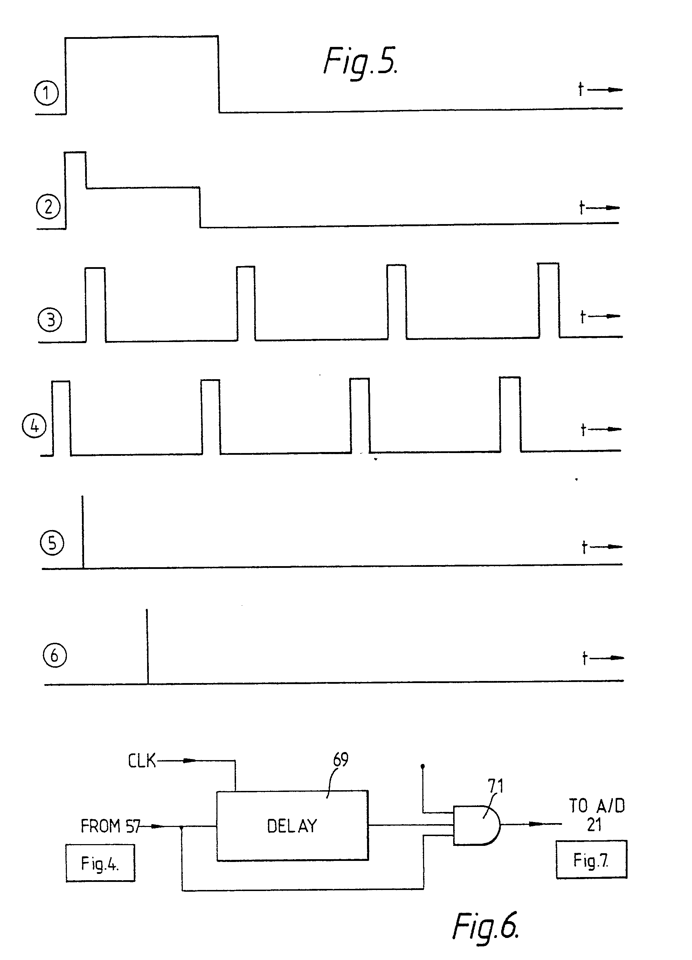

Referring to the circuit of figure 4 and the tuning diagram figure 5, the action is as follows:—

A logic '1' is clocked through the shift register 25 which successively applies a voltage pulse to each electrode 9 in turn. The $\overline{Q}$ output of the flip-flop 57 is high so the diodes 53, in series with each of the electrodes 9, are biased off. As no current flows, the amplitude of the pulses, at all points along each electrode 9, are the same making it possible to test for good probe contact.

The pulse detected by the probe 17 is compared by the analogue comparator 55 with the preset voltage. This voltage determines the minimum pulse amplitude the circuit will accept.

When a good contact is made by the probe 17 on one of the electrodes 9, the amplitude of the pulse will be large enough to cause the comparator output to change state. The first AND-gate 59 is enabled and allows a clock pulse through to clock the flip-flop 57. This causes the $\overline{Q}$ output to go low which allows the diodes 53 to conduct and current to flow along the electrodes. At the same instant the flip-flop Q-output goes high enabling the second AND-gate 63 which allows a strobe pulse through to the first sample-and-hold store 61 which acquires and holds the potentially divided measurement voltage sensed by the probe 17.

For high resolution systems it is not possible to set the comparator reference voltage accurately enough to discriminate down to a one pixel error in probe signal voltage. The second sample-and-hold store 65 is arranged to acquire the probe voltage during the initial period of the pulse. This test voltage is stored in the second sample-and-hold store 65 and is used as the scale reference voltage for the A/D converter 21. This has the effect of scaling the converter by the required amount to compensate for small variations in probe contact efficiency.

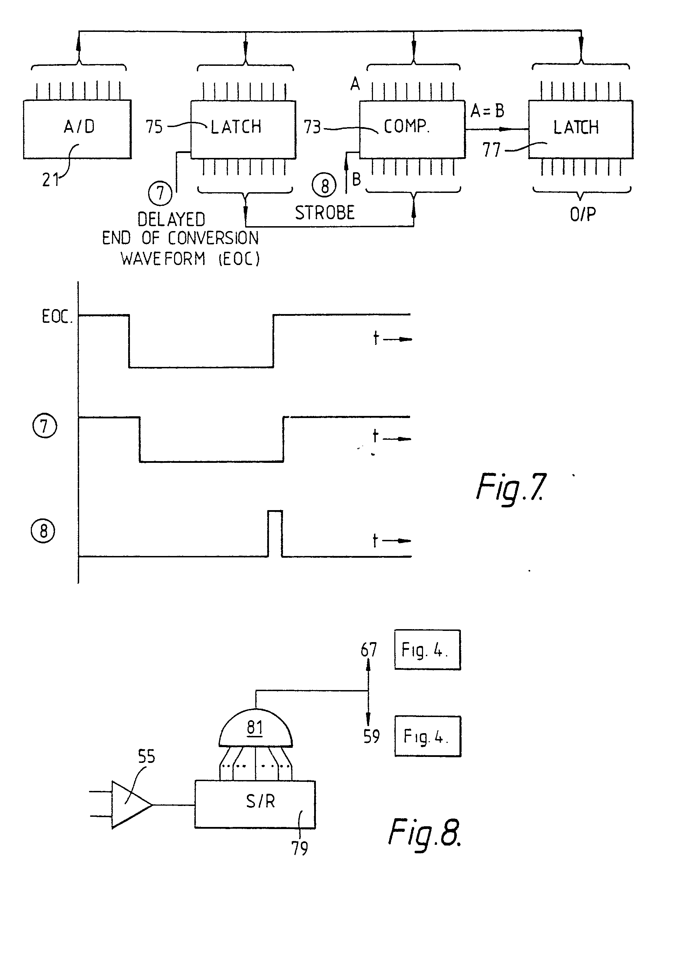

When the probe is not coupled to an electrode the probe input impedance is very high which makes the circuit vulnerable to external electrical interference. To combat this, the data validation circuits of figure 6 and figure 7 are included.

A second shift register 69 is used to delay the Q-output of the bistable flip-flop 57 by a time equal to that occurring between electrode drive pulses. The circuit is so arranged that the start pulse used to initiate the A/D converter is only passed when the output of this shift register 69 coincides with its input referred to a following AND-gate 71. This can only happen if two pulses of the correct repetition rate are received, thus single or spurious trains of pulses are ignored.

In figure 7 data held in the A/D converter 21, is compared by a digital comparator 73 with previous data held in a first latch 75. Only when these two are equal is new data transferred to a final latch 77. Two successive readings of the same amplitude are required for the output to change.

The shift register 25 shown in figure 4, may be replaced by the reference waveform drivers of the display. These waveforms may alternate in polarity, as e.g. the monopulse strobes shown in figure 2. However, the comparator 55 used in the way shown in figure 4 causes the circuitry to ignore negative polarity pulses on the electrodes 9. Thus the circuitry shown in figure 4 may be used essentially unaltered, although the alternations in polarity must be taken into account in the circuit timings. If the reference waveforms used to drive the display are pseudo-random binary sequence codes, additional circuitry shown in figure 8 is inserted immediately after the comparator 55 to detect the longest run of binary 1's and to output a single pulse which initiates measurement action during the last 1 of the run. This sub-circuit comprises a further shift-register 79 and a multiple input AND-gate 81.

Application

The invention described may be used with multiplexed dot-matrix liquid crystal devices, waveform-identity addressed oscilloscope and radar liquid crystal device displays and control panels, with back-projection displays—for example laser written smectic displays as also with cathode ray tube displays, especially those with long-persistance phosphors or using vector mode address.

## Claims

1. An interactive display system (Figure 1) comprising:—
an electrically addressable display (3) having a front screen (5);
resistive means (7) formed by a layer adjacent to and extending across the front surface of this screen (5);
an electrical source (11) connected to the resistive means (7) for applying energisation signals thereto; and
sensing means, including a probe (17) and probe circuit (19), responsive to the level of signal sensed, when the probe (17) is applied to the resistive means (7) to indicate the position of the probe contact;
the display (3) being characterised in that:—
the resistive means (7) is of partitioned structure, being comprised of a plurality of like electrodes (9), each a separate track of transparent resistive material;
the source (11) is such as to provide a set of distinguishable energisation signals, and is connected to apply a different signal to each electrode (9) simultaneously; and
the sensing means includes probe circuitry (19) for identifying different sensed signals, and, for determining the ordinate and abscissa of probe position from the level and identity found for each sensed signal.

2. A system as claimed in claim 1, wherein the resistive means (7) is integral with the screen (5) of the display (3).

3. A system as claimed in either claim 1 or claim 2, wherein each electrode track (9) makes but a single traverse of the screen (5) of the display.

4. A system as claimed in claims 2 and 3 wherein the tracks (9) correspond in number, dimension, and alignment, with address electrode on the reverse face of the screen (5).

5. A system as claimed in either claims 1 or 2 wherein each electrode track (9') is of folded configuration and makes a plurality of traverses of the screen (5') of the display (3') (Fig. 3).

6. A system as claimed in any one of the preceding claims wherein the source (11) is such as to provide a set of distinguishable signals all of common level.

7. A system as claimed in any one of the preceding claims wherein the source (11) is such as to provide a set of phase-delayed monopulse signals (fig. 2).

8. A system as claimed in any one of the preceding claims 1 to 6 wherein the source (11) is such as to provide a set of isogonal signals.

9. A system as claimed in any one of the preceding claims wherein a common source (11) is provided both for energisation and for addressing the display (3).

10. A system as claimed in any one of the preceding claims, including a protective layer of thin-film titanium dioxide overlying the front surface of the electrodes (9).

11. An interactive display system is claimed in any one of the preceding claims further characterised by:—
a test circuit (fig. 4) comprising:—
switch means (53) connected to each of the electrodes (9);
control means (57 & 59), co-operative with the switch means (53), for controlling switching of the electrodes (9) between a floating condition and a current carrying condition; and,
comparator means (55), co-operative with the probe (17), for comparing the probe output for the floating condition, a test output, against a preset reference voltage, and also co-operative with the control means (59) to switch the electrodes (9) to the current carrying condition whensoever the test output exceeds the preset voltage, to enable co-ordinate measurement.

12. A system as claimed in claim 11 wherein the switch means (53) comprises an assembly of diodes (53), and wherein the control means (57 & 59) comprises a common controllable diode bias source (57).

13. A system as claimed in claim 12 wherein the bias source is a bistable (57), the control input of which is connected to the output of the comparator means (55).

14. A system as claimed in any of claims 11 to 13 characterised further by:
a scaling circuit comprising:—
store means (65), co-operative with the probe (17), for holding the test output thereof, and,
scaling means (21), co-operative with both the probe (17) and the store means (65), for scaling the measurement output of the probe, or a signal derivative thereof, by a scale factor determined in accordance with the held value of the test output, to afford thereby self-calibrating correction.

15. A system as claimed in claim 13 characterised further by a first data validation circuit (fig. 6) comprising in combination:
a delay (69) connected to the Q-output of the bistable (57); and,
an AND-gate (71) connected to the Q-output of the bistable (57) and to the output of the delay (69), for enabling signal measurement in the event of coincidence of the delay and bistable outputs.

16. A display system as claimed in any one of the preceding claims further characterised by:—
a second data validation circuit (Fig. 7) comprising:—
an analogue-to-digital converter (21) responsive to probe output;
a first latch (75) for storing a first sample of the converter output;

a digital comparator (73) arranged for comparing this first sample with the next successive sample of the converter output; and,

a second latch (77) for storing samples of the converter output, and arranged to be enabled when the compared samples are the same.

**Patentansprüche**

1. Wechselwirkungs-Anzeigesystem (Fig. 1) mit:

einer elektrisch adressierbaren Anzeigeeinheit (3) mit einem Frontschrim (5),

einem durch eine über die Frontfläche dieses Schirms (5) verlaufende Schicht gebildeten Widerstand (7),

einer mit dem Widerstand (7) verbundenen elektrischen Quelle (11) zum Anlegen von Energiesignalen, und

Fühlermitteln mit einer Sonde (17) und einer Sondenschaltung (19), die beim Anlegen der Sonde (17) an den Widerstand (7) auf den abgetasteten Signalpegel ansprechen, um die Berührungsposition der Sonde anzuzeigen,

wobei die Anzeigeeinheit (3) dadurch gekennzeichnet ist, daß:

der Widerstand (7) einen unterteilten Aufbau aufweist und aus einer Vielzahl gleicher Elektroden (9) besteht, die

jeweils als gesonderte Spur aus durchsichtigem Widerstandsmaterial ausgebildet sind,

die Quelle (11) derart ausgebildet ist, daß sie eine Gruppe von unterscheidbaren Energiesignalen bereitstellt, und so geschaltet ist, daß sie an jede Elektrode (9) gleichzeitig je ein unterschiedliches Signal anlegt, und

die Fühlermittel eine Sondenschaltung (19) zur Identifizierung verschiedener abgetasteter Signale und zur Bestimmung von Ordinate und Abszisse der Sondenposition aus Pegel und Identität jedes abgetasteten Signals aufweisen.

2. System nach Anspruch 1, wobei der Widerstand (7) einteilig mit dem Schirm (5) der Anzeigeeinheit (3) ausgebildet ist.

3. System nach Anspruch 1 oder 2, wobei jede Elektrodenspur (9) nur eine einzige Durchquerung des Schirmes (5) der Anzeigeeinheit bildet.

4. System nach den Ansprüchen 2 und 3, wobei die Spuren (9) in Anzahl, Abmessung und Ausrichtung mit Adressenelektroden an der Rückseite des Schirmes (5) korrespondieren.

5. System nach Anspruch 1 oder 2, wobei jede Elektrodenspur (9') eine gefaltete Konfiguration aufweist und eine Vielzahl von Durchquerungen des Schirmes (5') der Anzeigeeinheit (3') bildet (Fig. 3).

6. System nach einem der vorhergehenden Ansprüche, wobei die Quelle (11) so ausgelegt ist, daß sie eine Gruppe unterscheidbarer Signale bereitstellt, die alle einen gemeinsamen Pegel haben.

7. System nach einem der vorhergehenden Ansprüche, wobei die Quelle (11) so ausgelegt ist, daß sie eine Gruppe von phasenverzögerten Einfachimpulssignalen erzeugt (Fig. 2).

8. System nach einem der vorhergehenden Ansprüche 1 bis 6, wobei die Quelle (11) so ausgebildet ist, daß sie eine Gruppe von isogonalen Signalen erzeugt.

9. System nach einem der vorhergehenden Ansprüche, wobei eine gemeinsame Quelle (11) sowohl zur Speisung als auch zur Adressierung der Anzeigeeinheit (3) vorgesehen ist.

10. System nach einem der vorhergehenden Ansprüche, mit einer die Frontfläche der Elektroden (9) überdeckenden Schutzschicht aus Dünnfilm-Titandioxid.

11. Wechselwirkungs-Anzeigesystem nach einem der vorhergehenden Ansprüche, das außerdem gekennzeichnet ist durch:

eine Testschaltung (4) mit:

jeweils an die Elektroden (9) angeschlossenen Schaltmitteln (53),

mit den Schaltmitteln (53) zusammenwirkenden Steuermitteln (57, 59) zur Steuerung der Umschaltung der Elektroden (9) zwischen einem gleitenden Zustand und einem stromführenden Zustand, und

einem mit der Sonde (17) zusammenwirkenden Vergleicher (55) zum Vergleich des Sondenausgangssignals im gleitenden Zustand, einem Testausgangssignal, gegenüber einer vorgegebenen Bezugsspannung, und der auch mit den Steuermitteln (59) zum Umschalten der Elektroden (9) in den stromführenden Zustand zusammenwirkt, wenn immer das Testausgangssignal eine vorgegebene Spannung übersteigt, um die Koordinatenmessung vernehmen zu können.

12. System nach Anspruch 11, wobei die Schaltmittel (53) eine Anordnung von Dioden (53) aufweisen und wobei die Steuermittel (57, 59) eine übliche steuerbare Diodenvorspannungsquelle (57) aufweisen.

13. System nach Anspruch 12, wobei die Vorspannungsquelle eine bistabile Schaltung (57) ist, deren Steuereingang mit dem Ausgang des Vergleichers (55) verbunden ist.

14. System nach einem der Ansprüche 11 bis 13, weiter gekennzeichnet durch:

eine Maßstabsschaltung mit;

einem Speicher (65), der mit der Sonde (17) zusammenwirkt und deren Testausgangssignal hält, und

einer sowohl mit der Sonde (17) als auch mit dem Speicher (65) zusammenwirkenden Meßstabseinrichtung (21) zur Maßstabsänderung des Meßausgangssignals der Sonde oder eines davon abgeleiteten Signals um einen entsprechend dem gehaltenen Wert des Testausgangssignals bestimmten Skalenfaktor zur Herstellung einer Selbsteichungskorrektur.

15. System nach Anspruch 13, weiter gekennzeichnet durch eine erste Datengültigkeitsschaltung (Fig. 6), die in Kombination aufweist:

ein an den Q-Ausgang der bistabilen Schaltung (57) angeschlossenes Verzögerungsglied (69), und

ein an den Q-Ausgang der bistabilen Schaltung (57) und den Ausgang des Verzögerungsglieds (69) angeschlossenes UND-Glied (71) zur Ermöglichung einer Signalmessung im Falle von Koinzidenz der Ausgangssignale des Verzögerungsglieds und der bistabilen Schaltung.

16. Anzeigesystem nach einem der vorhergehenden Ansprüche, weiter gekennzeichnet durch:

eine zweite Datengültigkeitsschaltung (Fig. 7) mit:

einem Analog-Digital-Wandler (21), der auf das Sondenausgangssignal anspricht,

einer ersten Halteschaltung (75) zum Speichern einer ersten Abfrage des Wandlerausgangssignals, einem digitalen Vergleicher (73) zum Vergleich dieser ersten Abfrage mit der nächstfolgenden Abfrage des Wandlerausgangssignals, und eine zweite Halteschaltung (77) zum Speichern von Abfragen des Wandlerausgangssignals, die so geschaltet ist, daß sie aktiviert wird, wenn die verglichenen Abfragen gleich sind.

## Revendications

1. Un système de visualisation interactif (figure 1) comprenant:

un visuel adressable électriquement (3) comportant un écran (5) placé à l'avant;

des moyens résistifs (7) formée par une couche adjacente à la surface avant de cet écran (5) et s'étendant sur cette surface;

une source électrique (11) connectée aux moyens résistifs (7) pour leur appliquer des signaux d'excitation; et

des moyens de détection, comprenant une sonde (17) et un circuit de sonde (19), réagissant au niveau de signal détecté, lorsque la sonde (17) est appliquée sur les moyens résistifs (7), pour indiquer la position du contact de la sonde:

le visuel (3) étant caractérisé en ce que:

les moyens résistifs (7) ont une structure divisée et sont constitués par un ensemble d'électrodes semblables (9), consistant chacune en une piste séparée de matière résistive transparente;

la source (11) est conçue de façon à produire un ensemble de signaux d'excitation pouvant être distingués, et elle est connectée de façon à appliquer simultanément un signal différent à chaque électrode (9); et

les moyens de détection comprennent un circuit de sonde (19) destiné à identifier différents signaux détectés, et à déterminer l'abscisse et l'ordonnée de la position de la sonde à partir du niveau et de l'identité trouvés pour chaque signal détecté.

2. Un système selon la revendication 1, dans lequel les moyens résistifs (7) font partie intégrante de l'écran (5) du visuel (3).

3. Un système selon la revendication 1 ou la revendication 2, dans lequel chaque piste d'électrode (9) ne traverse qu'une seule fois l'écran (5) du visuel.

4. Un système selon les revendications 2 et 3, dans lequel les pistes (9) correspondent, en nombre, en dimensions et en alignement, avec des électrodes d'adresse se trouvant sur la face arrière de l'écran (5).

5. Un système selon l'une ou l'autre des revendications 1 ou 2, dans lequel chaque piste d'électrode (9') a une configuration repliée et traverse plusieurs fois l'écran (5') du visuel (3') (figure 3).

6. Un système selon l'une quelconque des revendications précédentes, dans lequel la source (11) est conçue de façon à produire un ensemble de signaux pouvant être distingués ayant tous un niveau commun.

7. Un système selon l'une quelconque des revendications précédentes, dans lequel la source (11) est conçue de façon à produire un ensemble de signaux constitués par des impulsions uniques ayant des phases retardées (figure 2).

8. Un système selon l'une quelconque des revendications 1 à 6 précédentes, dans lequel la source (11) est conçue de façon à produire un ensemble de signaux isogonaux.

9. Un système selon l'une quelconque des revendications précédentes, dans lequel une source commune (11) est prévue à la fois pour l'excitation et pour l'adressage du visuel (3).

10. Un système selon l'une quelconque des revendications précédentes, comprenant une couche protectrice constituée par une pellicule mince de dioxyde de titane qui recouvre la surface avant des électrodes (9).

11. Un système de visualisation interactif selon l'une quelconque des revendications précédentes, caractérisé en outre par:

un circuit de test (figure 4) comprenant:

des moyens de commutation (53) connectés à chacune des électrodes (9);

des moyens de commande (57 et 58) qui coopèrent avec les moyens de commutation (53) de façon à commander la commutation des électrodes (9) entre un état flottant et un état d'acheminement de courant; et

des moyens comparateurs (55) qui coopèrent avec la sonde (17) de façon à comparer le signal de sortie de la sonde pour l'état flottant, c'est-à-dire un signal de sortie de test, avec une tension de référence fixée à l'avance, et qui coopèrent également avec les moyens de commande (59) de façon à commuter les électrodes (9) vers l'état d'acheminement de courant chaque fois que le signal de sortie de test dépasse la tension fixée à l'avance, pour permettre une mesure de coordonnées.

12. Un système selon la revendication 11, dans lequel les moyens de commutation (53) comprennent un ensemble de diodes (53), et dans lequel les moyens de commande (57 et 59) comprennent une source de polarisation commandée commune (57) pour les diodes.

13. Un système selon la revendication 12, dans lequel la source de polarisation est une bascule bistable (57) dont l'entrée de commande est connectée à la sortie des moyens comparteurs (55).

14. Un système selon l'une quelconque des revendications 1 à 13, caractérisé en outre par:

un circuit de pondération comprenant:

des moyens de mémorisation (65), coopérant avec la sonde (17), pour conserver le signal de sortie de test de celle-ci; et

des moyens de pondération (21) qui coopèrent à la fois avec la sonde (17) et les moyens de mémorisation (65), de façon à pondérer le signal de sortie de mesure de la sonde, ou un signal élaboré à partir de celui-ci, par un facteur de pondération déterminé conformément à la valeur conservée du signal de sortie de test, pour réaliser ainsi une correction d'auto-étalonnage.

15. Un système selon la revendication 13 caractérisé en outre par un premier circuit de validation de données (figure 6) comprenant en combinaison:

un circuit de retard (69) connecté à la sortie Q de la bascule bistable (57); et

une porte ET (71) connectée à la sortie Q de la bascule bistable (57) et à la sortie du circuit de retard (69), pour autoriser une mésure de signal en cas de coïncidence des signaux de sortie du circuit de retard et de la bascule bistable.

16. Un système de visualisation selon l'une quelconque des revendications précédentes, caractérisé en outre par:

un second circuit de validation de données (figure 7) comprenant:

un convertisseur analogique-numérique (21) qui fonctionne sous la dépendence du signal de sortie de la sonde;

un premier groupe de bascules (75) destiné à mémoriser un premier échantillon du signal de sortie du convertisseur;

un comparateur numérique (73) conçu de façon à comparer ce premier échantillon avec l'échantillon immédiatement suivant du signal de sortie du convertisseur; et

un second groupe de bascules (77) destiné à mémoriser des échantillons du signal de sortie du convertisseur, et connecté de façon à être validé lorsque les échantillons comparés sont identiques.

Fig.1.

Fig.2.

Fig. 3.

Fig.4.

Fig.5.

① _____t ⟶

② _____t ⟶

③ _____t ⟶

④ _____t ⟶

⑤ _____t ⟶

⑥ _____t ⟶

CLK ⟶

FROM 57 ⟶   | 69 |
             | DELAY |   )71   ⟶ TO A/D 21

Fig.4.                          Fig.7.

Fig.6.

4

Fig.7

Fig.8